# EUROPEAN PATENT SPECIFICATION

(11) **EP 1 716 927 B1**
(45) Date of publication and mention of the grant of the patent: **16.09.2009**
(21) Application number: 06008365.6
(22) Date of filing: 22.04.2006
(51) Int. Cl.: B03D 1/14, B03D 1/24

(54) **Dissolved gas flotation system**
Entspannungsflotationssystem
Systeme par la flottation à l'air dissous

(30) Priority: 22.04.2005 IT MI20050734
(43) Date of publication of application: 02.11.2006
(73) Proprietor: AUSTEP-AUSTEAM Environmental Protection S.r.l., 20138 Milano (IT)
(72) Inventor: Massone, Alessandro Giuseppe, 20137 Milano (IT)
(74) Representative: Zanella, Ireneo

(56) References cited:
- WO-A-93/23334
- WO-A-94/21561
- US-A- 4 184 967
- US-A- 5 160 611
- US-A- 5 275 732
- US-B1- 6 364 123

## Description

### Technical Field

The present invention relates to a system for continuously clarifying liquids having solid suspended substances, even of high concentrations, by means of flotation with dissolved gas, according to the preamble of claim 1.

### Background of the Invention

Clarifying systems of the above mentioned type are already known in several embodiments. The Italian Patent No. 1,269,815 discloses a flotating device including a flotation basin with a hydrostatic head corresponding to a liquid height from 400 to 3,000 mm, and including rectangular or circular basins having a flotated sludge collecting system including rotary chain or scroll scrapers. In a circular flotating device, the clarifying liquid is supplied through a plurality of tubes rigid with the device bridge crane or at a central region of the basin bottom, against a disc deflector, thereby providing a radial distribution according to a fully open circular path, as also disclosed by the Italian Patent 1,239,047 and corresponding to European Patent EP 0 442 463.

The clarified liquid is centrally taken from outlet holes arranged immediately under the inlet holes, as shown in the Italian Patent No. 1,318,579.

Prior flotating systems, however, are affected by several drawbacks and disadvantages. At first, liquid stagnation or shorting effects can occur inside the basin. Moreover, by providing a clarified liquid centralized collecting region, high return speeds occur at the zones nearest to the holes.

Thus, if the clarified liquid is collected from the basin central column, then the high collecting speed or rate in this region would tend to back-entrain dissolved air and/or suspended solid substances.

On the other hand, if the clarified liquid is collected from the outer circumference of the basin, then in this region one will have a much less amount of air for holding the solid particles suspended.

U.S. Pat. No. 5,275,732 discloses a combined coarse and fine bubble separation system comprising a flotation basin (63), a scroll (113) which discharges floated material into a central chamber (61, 42), a supply circuit (16, 70, 11, 20, 40) with a gas pressurizing unit (1, 2) and a clarified collection means (90E), wherein said collection means (90E) inside said basin (63) has the shape of a perforated annular tube the diameter of which is only a little smaller than the interval diameter of the basin tank (205). No other diameter dimension of said circular tube is stated or suggested. Under such circumstance it is not possible to carry out a clarified liquid collection with a substantially even rate along the overall annular collection extension and to eliminate any liquid prior stagnation regions and short effects inside said flotation basin.

All the necessary influent water, chemical and/or microorganisms feeders (20, 55, 56) flow directly into said flotation basin (63). No mixing chamber is provided for delivering in said basin (63) in a mixed form both the liquid to be treated and the pressurized recycled liquid, as well as polyelectrolyte or the like so that a modulable type of microbubble bed under the floated layer with a consequent improvement of the suspended solid substance removal yield can not be reached.

WO 94/21561 A discloses a dissolved air flotation apparatus and method comprising a flotation basin (fig. 6, 12) with a central collecting chamber (18), a radical arranged rotary scroll (16), a clarified liquid collection means (78, 62, 66, 67), a plurality of radially disposed modular cells (54) and a supply circuit for pressurized materials (62, 84, 82, 80, 92,94), wherein said valve (94) direct the pressurized materials partly indirectly to the flotation basin (12) (those projecting radially outwards) and partly indirectly into said flocculation chamber (14) (basically those projecting inwards).

Said valve (54) is placed inside the flotation apparatus at the top of said flotation basin (12) between the latter and said collecting chamber (18).

The operation of said valve (54) does not lead to a mixing action able to allow the formation of a modulable type of microbubble bed under the floated layer and a consequent improvement of the suspended solid substance removable yield.

In the shown apparatus the collection tubes (78, 78a) in each cell (54) for the clarified water have a multiple T-shape, wherein said T-shape is formed by slotted conduits (78) projecting from a main radially disposed conduit (78a) which is placed horizontally at the bottom of each cell (54). A vertical position of said collection tubes (78, 78a) is neither shown nor suggested.

U.S. Pat. No. 4,184,967 discloses a multi-bladed scoop for a flotation apparatus which scoop by the rotation thereof successively define continuously varying angles.

WO 93/23334 A1 discloses a flotation apparatus for clarifying water and shows the longitudinal view of a scope having a plurality of varying inclination angles.

U.S. 6,364,123 Pat. No. discloses a flotation tank with a scoop which, when rotating, defines different angles.

In prior flotating devices, furthermore, the liquid containing gas dissolved therein under pressure is supplied at a rate of 100% before the inlet to the flotation basin or, alternately, at a rate of 100% inside the flotation basin itself. Such a supplying method of the liquid containing gas dissolved therein under pressure does not allow to provide a modulable microbubble beds under the flotated layer, to improve the suspended solid substance removal yield.

Accordingly, the aim of the present invention is to provide a system for continuously clarifying liquids having solid suspended substances by means of flotation with dissolved gas, adapted to overcome the above mentioned drawbacks and disadvantages of prior flotating devices or systems, and increase the solid/liquid separating yield, that is the suspended substances removal yield.

### Summary of the Invention

The above mentioned aim is achieved by a fotating system having the features of claim 1.

Further developments and advantageous embodiments are defined by the dependent claims.

The flotating system according to the present invention provides a lot of important advantages. At first, the collection of the clarified liquid along an annular region having a diameter included between the inner diameter and outer diameter of the flotation basin, allows to carry out said collection with a substantially even rate along the overall annular collection extension, thereby to eliminate any liquid prior stagnation regions, or short effects, inside the flotation basin. Such an annular removal of the clarified liquid can be performed by a perforated, annular tube, spaced from the bottom of the basin, or by individual perforated pillar or column elements, having for example a T-shaped, arranged along a middle circumference and anchored on the bottom of the flotation basin. Both the use of an annular perforated tube and of the circumferentially arranged pillar or column elements, may be achieved in a very simple manner without requiring main maintenance operations. A further advantage is the possibility of adjusting the supply of the liquid containing gas dissolved therein under pressure between a direct supply to the flotation basin and an indirect supply to said basin through a mixing chamber, which advantageously allows to form a modulable type of microbubble bed under the flotated layer with a consequent improvement of the suspended solid substance removal yield. Moreover, the provision of a reaction chamber including means for mixing the particles and metering the polyelectrolyte material, allows to optimize the mixing of particles, air and polyelectrolyte, thereby increasing the solid substance/liquid separating yield.

Furthermore, according to the improvements of the present invention, it is possible to also increase the allowable particle concentrations from 1,000-5,000 mg/l to 300-20,000 mg/l.

### Brief Description of the Drawings

Further characteristics, advantages and details of the subject system for continuously clarifying liquids having solid suspended substances by means of flotation with dissolved gas will become more apparent hereinafter from the following disclosure referred to a preferred embodiment of the invention which is schematically illustrated, by way of an indicative, but not limitative, example, in the accompanying drawings, where:
Figure 1 is a middle vertical cross-sectioned schematic view taken through the flotation basin of the flotating system with the related basic operating circuit;

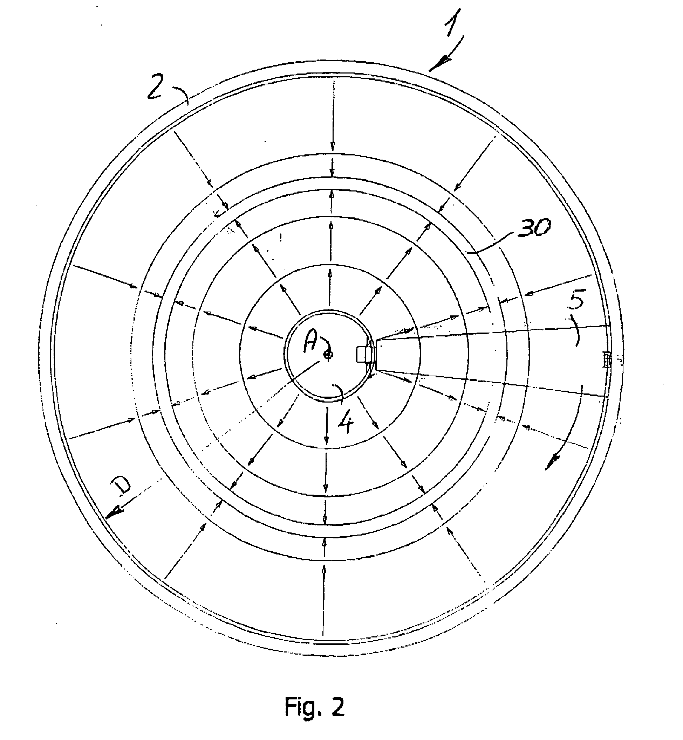

Figure 2 is a top plan view of the flotation basin of figure 1, the arrows indicating the radial return movements from the basin center and outer edge toward the perforated annular tube.

### Detailed Description of the Preferred Embodiments

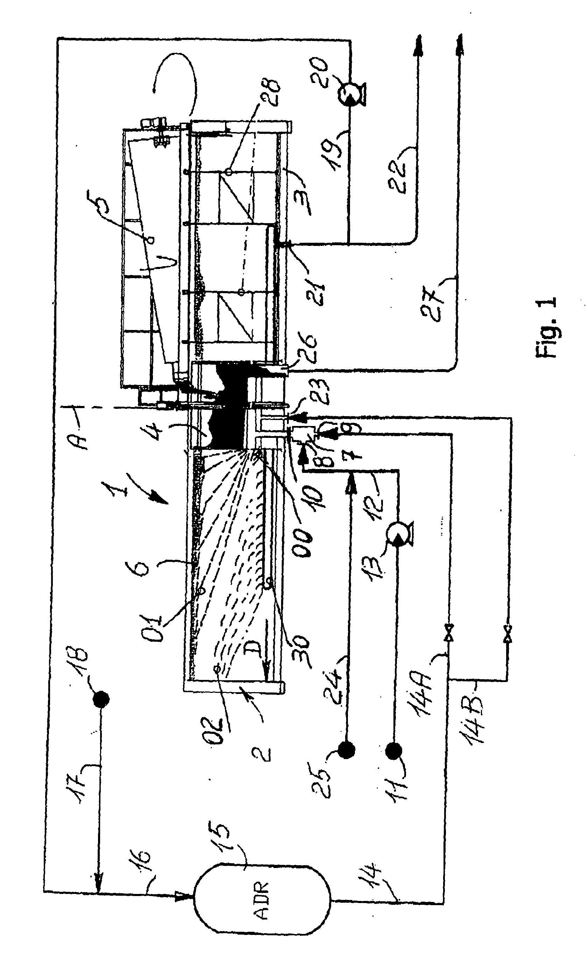

The system for continuously clarifying liquids having solid suspended substances by means of flotation with dissolved gas has been generally indicated by the reference number 1 (figure 1) and comprises, in a per se known manner, a circular flotation basin 2 having a basin bottom 3 and including a central chamber 4 for collecting and ejecting the floated mud, and a radial scroll 5 for collecting the flotated mud, said scroll being rotatably mounted in a bridge or head crane construction on the top edge of the basin and being coupled to known rotary driving means. The reference number 6 shows the flotated mud floating on the liquid in the basin 2.

According to the invention, a mixing chamber 7 is associated with said basin, said chamber including a first inlet 8, a second inlet 9 and an outlet 10, said first inlet 8 being supplied, from the inlet 11 through a duct 12 and a pump 13, with the liquid having solid suspended substances to be processed, whereas the second inlet 9 is supplied, in a preset rate, with the indirect liquid containing gas dissolved therein under pressure through the duct 14 coming, for example, from a reactor 15 for dissolving air into water, wherein pressurized air is supplied to said reactor 15 through a duct 16 to which a further duct 17 communicating with a pressurized air source 18 is connected. Clarified liquid is supplied into the reactor 15 through a duct 19 containing a pump 20 therein, and leading to a fitting 21 for taking clarified liquid from the basin 2, as it will be disclosed in a more detailed manner hereinafter. The reference number 22 shows the clarified liquid taking or removing duct.

The outlet 10 of the liquid having solid suspended substances - liquid containing gas dissolved therein under pressure chamber leads to the inside of the basin 2, in an eccentric manner with respect to the middle vertical axis A of the basin, that is the rotary axis of the scroll 5.

As is shown in figure 1, from the outlet duct 14 of the reactor 15 extends, in addition to the duct 14A, a further duct 14B for partially directly supplying the liquid containing gas dissolved therein under pressure to the basin 2 through the inlet 23, also eccentrically arranged with the middle axis of the basin 2. Figure 1 shows moreover that to the inlet duct 12 for supplying the liquid having solid suspended substances to the mixing chamber 7 leads a further supplying duct 24 for supplying a polyelectrolyte taken from a polyelectrolyte tank 25. The reference number 26 shows an outlet fitting for discharging the flotated mud with a related mud collecting duct 27. The reference number 28 shows known scrapers for scraping the basin bottom to remove therefrom settled solid substances.

According to the invention, the collection of the clarified liquid is performed along a middle circumferential region of the basin, for example in a range from 1/3 to 5/6 of the outer diameter D of said basin 2. Further according to the invention, this is carried out by using an annular tube 30 having, for example, a diameter of 50-400 mm, spaced from the bottom 3 of the basin 2, for example with a height from said bottom corresponding to about 1/10 to 5/6 of the height of the liquid in said basin and having a plurality of openings, either fixed or movable and/or replaceable, for example in the form of screw-on nozzles, distributed along said perforated annular tube and arranged, with any desired arrangement, both vertically and with several slanted patterns. Said clarified liquid collecting openings can be provided in any suitable number and in one or more rows with paired openings, or in an unaligned arrangement, depending on the flow-rate to be processed. Alternately, said clarified liquid collecting holes or openings can also be formed by means of pillar or column elements, having for example a T-shape, and circumferentially distributed and anchored to the bottom 3 of the basin.

With the mixed supply of liquid containing gas dissolved therein under pressure according to the invention, the direct liquid containing gas dissolved therein under pressure, directly entering the basin 2 will correspond, for example, to 30% whereas the indirect liquid containing gas dissolved therein under pressure, that is entering the basin after having passed through the mixing chamber 7, will correspond to a rate of 70% of the overall liquid containing gas dissolved therein under pressure, the reference 00 indicating the annular supply or delivery of the direct liquid containing gas dissolved therein under pressure and the reference 01 indicating the delivery of the indirect liquid containing gas dissolved therein under pressure, as schematically shown by dashed lines. The reference 02 shows, by dashed lines, the return liquid, which is caused to return by the clarified liquid taking annular tube 30.

Thus, by the above disclosed system for providing a mixed supplying or delivery of the liquid containing gas dissolved therein under pressure, in the flotation basin 2 a modulable microbubble bed under the flotated particle layer 6 will be formed, with a consequent improvement of the suspended solid substance removal yield.

The reaction chamber 7, for mixing the liquid having suspended substances, mud and said indirect liquid containing gas dissolved therein under pressure and metering a polyelectrolyte, arranged, in the shown embodiment, under the basin 2, is based on a lateral supplying of the particles (staples, mud, fibers, oils and so on) to be flotated and on a supply of water containing gas dissolved therein under pressure from the bottom to the top. In particular, the reaction chamber 7 for mixing the mud particles and metering the polyelectrolyte is so dimensioned as to optimize the mixing of said mud particles, air and polyelectrolyte thereby enhancing the solid substance/liquid separating yield.

From the above constructional and operational disclosure, it should be apparent that the subject system for continuously clarifying liquids having solid suspended substances by means of flotation with dissolved gas the above indicated aim is efficiently achieved thereby providing the above mentioned advantages.

## Claims

1. A system for continuously clarifying a liquid having solid suspended substances by means of flotation with dissolved gas, said system comprising:
- a flotation basin (2) with a central collecting chamber (4) for collecting and discharging the flotated mud,
- a rotary scroll (5) radially arranged above said basin,
- an annular perforated means for collecting the clarified liquid, and
- a supplying circuit for supplying said liquid having solid suspended substances and a liquid (14, 14A, 14B) containing gas dissolved therein under pressure as well as a polyelectrolyte, and for discharging the clarified liquid and the floated mud, **characterized in that**
a) said collecting annular perforated means is formed by an annular tube (30) having a middle diameter with respect to the outer diameter (D) of said basin (2), for example in the range from 1/3 to 4/5 of the basin diameter (D), or by a plurality of T-shaped pillars, distributed along a circumference,
wherein said pillars are anchored to said basin bottom (3) and clamped on a manifold ring element, and
b) **in that** besides a direct supply (14B) of said liquid containing gas dissolved therein under pressure inside said basin (2) an external mixing chamber (7) is provided which is able to indirectly supply (10) in a mixed form inside said basin (2)
- said liquid containing gas dissolved therein under pressure (14A) which flows through said mixing chamber (7) in a depressurized form from a second inlet (9) at the bottom to the top thereof, and
- said liquid having solid suspended substance (11), as well as
- said polyelectrolyte (25)
which enter in said mixing chamber (7) through a first inlet (8) in a lateral direction,
wherein the mixing chamber outlet (10) and the direct supply (14B) for said liquid containing gas dissolved therein under pressure are arranged eccentric with respect to the vertical middle axis (A) of said basin (2).

2. A system according to claim 1, **characterized in that** said clarified liquid collecting annular tube (30) comprises a plurality of openings, wherein said openings are evenly distributed along a circumference of said annular tube (30), and are arranged at the top or laterally along said annular tube (30), and wherein said openings are provided as simple throughgoing openings or interchangeable nozzles.

3. A system according to claim 1, **characterized in that** said direct and indirect supplies (14B,14A) of said liquid containing gas dissolved therein under pressure are adjustable.

## Patentansprüche

1. System zum kontinuierlichen Reinigen oder Klären einer Flüssigkeit mit festen schwebenden Substanzen oder eine Suspension ausbildenden Substanzen mittels Flotation mit gelöstem Gas mit:
- einem Flotations-Bassin (2) mit einer zentralen Sammelkammer (4) zum Sammeln und Absondern oder Entfernen des flotierten Schlamms,
- einem rotierenden Rollbalken (engl.: "scroll") (5), der über dem Bassin radial angeordnet ist,
- einem ringförmigen perforierten Mittel zum Sammeln der gereinigten oder geklärten Flüssigkeit und
- einem Bereitstellungskreis zum Bereitstellen der Flüssigkeit mit den festen schwebenden Substanz oder den Substanzen in Suspension und einer Flüssigkeit (14, 14A, 14B), die das darin unter Druck gelöste Gas beinhaltet sowie ein(es) Polyelektrolyt(s) sowie zur Entfernung der geklärten oder gereinigten Flüssigkeit und des flotierten Schlamms,
**dadurch gekennzeichnet, dass**
a) das sammelnde ringförmige perforierte Mittel gebildet ist mit einem ringförmigen Rohr (30), welches einen mittleren Durchmesser besitzt, der hinsichtlich des äußeren Durchmessers (D) des Bassins (2) beispielsweise im Bereich von 1/3 bis 4/5 des Durchmesser (D) des Bassins liegt oder durch mehrere T-förmige Säulen, die um den Umfang verteilt sind, wobei die Säulen verankert sind in dem Boden (3) des Bassins und geklammert oder eingespannt sind auf einem Sammelring-Element, und
b) dass neben einer direkten Bereitstellung (14B) der Flüssigkeit, die das darin unter Druck gelöste Gas enthält, in dem Bassin (2) eine externe Mischkammer (7) vorgesehen ist, die in der Lage ist, indirekt in gemischter Form in dem Bassin (2) bereitzustellen
- die Flüssigkeit, die das darin unter Druck (14A) gelöste Gas enthält, welche durch die Mischkammer (7) in druckverringerter Form von einem zweiten Einlass (9) bei dem Boden zu der Oberseite fließt, und
- die Flüssigkeit mit der festen schwebenden Substanz oder Substanz in Suspension (11) ebenso wie
- das Polyelektrolyt (25), die in die Mischkammer (7) durch einen ersten Einlass (8) in eine laterale Richtung eintreten,
wobei der Auslass (10) der Mischkammer und die direkte Bereitstellung (14B) für die Flüssigkeit, die das darin unter Druck gelöste Gas beinhaltet, exzentrisch zu der vertikalen Mittelachse (A) des Bassins (2) angeordnet sind.

2. System nach Anspruch 1, **dadurch gekennzeichnet, dass** das ringförmige Rohr (30) zum Sammeln des geklärten Fluids mehrere Öffnungen besitzt, wobei die Öffnungen gleichmäßig entlang eines Umfangs des ringförmigen Rohrs (30) verteilt sind und bei der Oberseite oder lateral entlang des ringförmigen Rohrs (30) angeordnet sind und wobei die Öffnungen als einfache Durchgangsöffnungen oder austauschbare Düsen ausgebildet sind.

3. System nach Anspruch 1, **dadurch gekennzeichnet, dass** die direkte und indirekte Bereitstellung (14B, 14A) für die Flüssigkeit, die das darin unter Druck gelöste Gas beinhaltet, anpassbar oder einstellbar sind.

## Revendications

1. Système pour la clarification continue d'un liquide ayant des substances solides suspendues au moyen d'une flottation avec un gaz dissous, ledit système comprenant:
- un bassin de flottation (2) avec une chambre de collecte centrale (4) pour collecter et évacuer la boue en flottation,
- une volute rotative (5) agencée radicalement au-dessus dudit bassin,
- un moyen annulaire perforé pour recueillir le liquide clarifié et
- un circuit d'amenée pour amener ledit liquide ayant des substances solides en suspension et un liquide (14, 14A, 14B) contenant du gaz dissous dans celui-ci sous pression ainsi qu'un polyélectrolyte, et pour évacuer le liquide clarifié et la boue en flottation, **caractérisé en ce que**
a) ledit moyen de collecte annulaire perforé est formé par un tube annulaire (30) ayant un diamètre médian par rapport au diamètre externe (D) dudit bassin (2), par exemple dans la plage de 1/3 à 4/5 du diamètre du bassin (D), ou
par une pluralité de piliers en forme de T, distribués le long d'une circonférence, où lesdits piliers sont ancrés audit fond de bassin (3) et serrés sur un élément annulaire de collecteur, et
b) **en ce qu'**à part une amenée directe (14B) dudit liquide contenant du gaz dissous dans celui-ci sous pression à l'intérieur dudit bassin (2), une chambre de mélange externe (7) est réalisée qui est apte à fournir indirectement (10) sous une forme mélangée à l'intérieur dudit bassin (2)
- ledit liquide contenant du gaz dissous dans celui-ci sous pression (14A) qui s'écoule à travers ladite chambre de mélange (7) sous une forme dépressurisée à partir d'une deuxième entrée (9) au fond jusqu'au dessus de celle-ci, et
- ledit liquide ayant une substance solide en suspension (11) ainsi que
- ledit polyélectrolyte (25)
qui entrent à travers une première entrée (8) dans ladite chambre de mélange (7) dans une direction latérale,
où la sortie (10) de la chambre de mélange et l'amenée directe (14B) pour ledit liquide contenant du gaz dissous dans celui-ci sous pression sont agencées d'une manière excentrique par rapport à l'axe médian vertical (A) dudit bassin (2).

2. Système selon la revendication 1, **caractérisé en ce que** ledit tube annulaire de collecte de liquide clarifié (30) comprend plusieurs ouvertures, lesdites ouvertures sont uniformément distribuées le long d'une circonférence dudit tube annulaire (30) et sont agencées au-dessus ou latéralement le long dudit tube annulaire (30), et où lesdites ouvertures sont réalisées comme de simples ouvertures traversantes ou buses interchangeables.

3. Système selon la revendication 1, **caractérisé en ce que** lesdites amenées directe et indirecte (14B, 14A) dudit liquide contenant du gaz dissous dans celui-ci sous pression sont ajustables.
